# EUROPEAN PATENT SPECIFICATION

(11) **EP 2 335 911 B1**
(45) Date of publication and mention of the grant of the patent: **22.08.2012**
(21) Application number: 10195457.6
(22) Date of filing: 16.12.2010
(51) Int. Cl.: B29D 30/00, B29D 30/08, B29C 73/16, B60C 19/12

(54) **Pneumatic tire with built-in innermost adhesive layer and post cure applied sealant**
Luftreifen mit eingebauter innerer Haftschicht und nach der Härtung aufgebrachtes Abdichtmittel
Pneu avec couche adhésive centrale intégrée et obturateur appliqué post-traitement

(30) Priority: 18.12.2009 US 641505
(43) Date of publication of application: 22.06.2011
(73) Proprietor: The Goodyear Tire & Rubber Company, Akron, OH 44316-0001 (US)
(72) Inventor: Majumdar, Ramendra Nath, Hudson, OH 44236 (US); Whitney, Thomas Wood, Grand Island, NY 14072 (US)
(74) Representative: Kutsch, Bernd

(56) References cited:
- EP-A1- 2 042 296
- EP-A2- 0 080 968
- US-A1- 2004 206 438

## Description

### Field of the Invention

The present invention is directed to a cured pneumatic tire having a built-in innermost adhesive layer co-cured and thereby integral therewith and a tire post cure applied polyurethane sealant thereon. The invention is also directed to a method of manufacturing a pneumatic tire.

### Background of the Invention

Pneumatic tires have been suggested which contain built-in polyurethane based sealant layers which can flow into a tire puncture hole for a purpose of resisting flow of tire inflation air through the tire puncture and to thereby promote a resistance of the pneumatic tire going flat by loss of tire inflation air. For example, see US-A- 2009/0078352.

Further tires with a sealant layer are known from e.g. EP-A-0 080 968, EP-A-2 042 296 or US-A-2004/0206438.

Other pneumatic tires have been proposed where a polyurethane sealant is not built into the tire but is applied to an already cured tire.

However, such application of a polyurethane sealant layer to an already cured tire typically involves one or more tedious and time consuming steps such as, for example:
(A) cleaning step for a portion of the cured tire inner liner - to remove mold release compounds and/or rubber processing oil which has migrated to the rubber surface;
(B) application and drying of solvent based adhesive;
(C) application of the polyurethane sealant layer.

Accordingly, is it a significant aspect of this invention to more conveniently provide adhesion of a polyurethane sealant layer to a cured tire.

### Summary of the Invention

The invention is directed to a pneumatic tire in accordance with claim 1 and to a method in accordance with claim 7.

Dependent claims refer to preferred embodiments of the invention.

In accordance with a preferred aspect of this invention, a pneumatic tire comprises:
(A) a sulfur cured assembly comprising an outer circumferential rubber tread, a supporting carcass, an innerliner rubber layer inwardly disposed on said supporting carcass and a built-in polymeric sulfur curable thermoplastic diene-based polyurethane (TPU) adhesive layer co-cured and thereby integral therewith and disposed on and inwardly of said rubber innerliner layer as an inner surface of said sulfur cured pneumatic tire, and
(B) a polyurethane sealant layer adhered to said built-in adhesive layer of said sulfur cured pneumatic tire which provides self-sealing properties to the pneumatic tire.

In further accordance with a preferred aspect of this invention a method of preparing a pneumatic tire comprises:
(A) applying a polymeric adhesive layer comprise a sulfur curable diene-based thermoplastic polyurethane (TPU) circumferentially around a tire-building apparatus such as a building drum to which a protective removable polymeric film has been applied which can later be removed from the adhesive layer after curing the tire assembly,
(B) building a remainder of tire components onto the adhesive layer including an optional sulfur curable rubber barrier layer overlaying said diene-based polyurethane adhesive layer, a sulfur curable inner liner layer overlaying or underlaying said rubber barrier layer, a tire carcass and an outer a rubber tire tread onto the tire carcass to define an unvulcanized tire assembly, and removing the unvulcanized tire assembly from said tire building apparatus,
(C) sulfur vulcanizing the unvulcanized tire assembly in a suitable mold at an elevated temperature to provide a co-cured and thereby integral, adhesive diene-based polyurethane layer on said inner liner rubber layer,
(D) removing said removable protective polymeric film from said diene-based polyurethane adhesive layer to provide a clean surface, and
(E) applying and adhering a polyurethane based sealant layer to said clean surface of said integral adhesive layer to provide a self-sealant property for said pneumatic tire.

By virtue of the foregoing, there is provided a pneumatic tire that has an ability to seal against various puncturing objects.

### Brief Description of the Drawings

The accompanying drawings are provided for a better understanding of the invention.

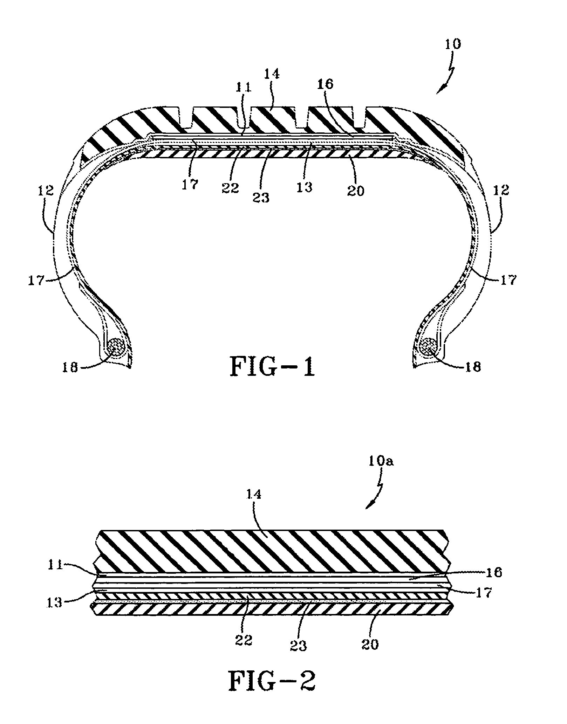

In the drawings, FIGURE 1 (FIG 1) is a cross-sectional view of a pneumatic tire which contains a circumferential built-in adhesive layer which is integral with and external to the tire rubber innerliner layer and which further contains a post tire cure applied polyurethane sealant layer adhered to said adhesive layer to, and

FIGURE 2 (FIG 2) is a partial cross-sectional view of a portion of the tire with a post-tire cure applied polyurethane sealant layer.

### Detailed Description of the Drawings

In FIG 1, a cross-section of a sulfur cured pneumatic tire 10 is presented comprising a tread 14 which includes a tread base rubber layer 11, sidewalls 12, spaced apart beads 18 and carcass underlying the tread 14 (including the tread base layer 11), comprising one or more cords reinforced (e.g. wire cord reinforced) rubber belt plies 16, one or more cords reinforced (e.g. synthetic nylon or polyester cord reinforced) rubber carcass ply 17 and an optional rubber barrier layer 13 with inner liner rubber layer 22 being positioned radially inward of the carcass and the optional barrier layer 13 and the carcass ply 17 together with a built-in, adhesive layer 23 which is interfacially co-cured with said optional barrier layer 13, or said carcass ply 17 if said barrier layer 13 is not present, and is therefore integral therewith. Said adhesive layer 23 comprises polymeric sulfur curable diene-containing thermoplastic polyurethane (TPU) which is positioned on and integral with said innerliner rubber layer 22.

Over the co-cured polymeric adhesive layer 23 of said sulfur cured pneumatic tire 10 is a post tire cure applied (applied after the tire is cured) crosslinked polyurethane based annular sealant layer 20 adhered to said adhesive layer 23 which has a property of sealing punctures caused by various puncturing objects.

In one embodiment, the polyurethane sealant layer 20 is a polyurethane composition applied to said adhesive layer of said sulfur cured tire as a pre-formed solid, self healing, puncture sealing polyurethane layer. The pre-formed solid polyurethane layer can be a seamless tubular polyurethane or a circumferential sheet with its ends abutted together.

In another embodiment, the polyurethane sealant layer 20 is applied to said adhesive layer of said sulfur cured tire as a liquid polyurethane precursor comprising a polyurethane reaction mixture and said liquid reaction mixture allowed to react and form a self healing puncture sealing polyurethane layer adhered to said adhesive layer. Such liquid polyurethane reaction mixture may be applied to the built-in adhesive layer of said cured tire by spin casting procedure in which, for example, the tire is spun, or rotated, around a dispensing nozzle from which the liquid reaction mixture is dispensed, or sprayed, onto the adhesive layer.

In practice, the pre-formed polyurethane sealant layer may be substantially non-flowable in a sense that a sheet of the polyurethane, for example, may contact another sheet yet be pulled apart with relative ease and still substantially maintain its original form. Such polyurethane sealant may be, for example, a reaction product of methylene diphenyl 4,4'-diisocyanate (MDI) and poly(alkylene oxide) glycol. A suitable polyurethane composition for use as the precursor sealant layer may be obtained from Novex, Inc. of Wadsworth, Ohio. A self healing polyurethane as Tireliner™ by Silverstone, Inc. can also be used. It should be understood that formulations of polyurethane materials that can be used for the self-healing polyurethane composition may be readily produced by persons having ordinary skill in the art from known chemistry techniques in the production of polyurethanes.

In practice, said polymeric adhesive layer 23 may be a sulfur curable thermoplastic polyurethane elastomeric material (TPU) as a diene-based polyurethane as, for example, 7840 TPU™ from global specialty chemicals manufacturer Sartomer Company.

It is to be appreciated that upon vulcanization of the tire assembly at an elevated temperature, the sulfur curable diene-based polyurethane (TPU) adhesive layer becomes co-cured with and thereby integral with the tire inner liner rubber layer.

Because the diene-based polyurethane (TPU) is sulfur curable, for one embodiment of the invention, the said inner liner rubber composition may comprise a combination of sulfur curable rubber (e.g. at least one diene-based elastomer) and said sulfur curable diene-based polyurethane (TPU).

The tire inner liner rubber layer 22 may comprise a conventional sulfur curable rubber inner liner for use in pneumatic tires. In one example, the rubber innerliner 22 can be a sulfur curative-containing halobutyl rubber composition of a halobutyl rubber such as for example chlorobutyl rubber or bromobutyl rubber. Such halobutyl rubber based inner liner layer may also contain one or more sulfur curable diene-based elastomers such as, for example, cis 1,4-polyisoprene natural rubber, cis 1,4-polybutadiene rubber and styrene/butadiene rubber, or mixtures thereof. The inner liner 22 is normally prepared by conventional calendering or milling techniques to form a strip of uncured compounded rubber of appropriate width. When the tire 10 is cured, the inner liner 22 becomes co-cured and thereby integral with, the tire 10. Tire inner liner rubber layers and their methods of preparation are well known to those having skill in such art.

In practice, it is considered herein that said sulfur curable inner liner rubber layer 22 may:
(A) comprise a combination of sulfur curable rubber and at least one of sulfur curable diene-based polyurethane and millable non diene-based polyurethane, or
(B) have a layer of sulfur curable diene-based polyurethane on its sulfur curable rubber surface adjacent to said polyurethane sealant layer 20.

This is considered herein as being significant in a sense of promoting tack and adhesion between the polyurethane sealant layer 20 and inner liner rubber layer 22 within the tire.

A millable polyurethane is a low molecular weight polyurethane which can be blended with other materials. Exemplary millable polyurethanes are, for example, available from TSE Industries, Inc.

The tire carcass generally may be any conventional tire carcass for use in pneumatic tires 10. Generally, the tire carcass includes one or more layers of cord-containing carcass plies 17 and acts as a supporting structure for the tread portion 14 and sidewalls 12. The various tire components, for example the tire tread 14, sidewalls 12, and reinforcing beads 18 may generally may be selected from those well known in the art. Like the tire inner liner 22, the tire carcass, tire tread 14, and beads 18 and their methods of preparation are well known to those having skill in such art.

FIG 2 depicts a partial cross-section of the sulfur cured pneumatic tire 10, labeled as 10a in FIG 2, comprising the tire tread 14 with its tread base rubber layer 11, wire cord reinforced rubber belt plies 16, carcass with synthetic cord reinforced rubber carcass ply 17 (e.g. synthetic fiber based cord such as, for example, nylon or polyester cord), an optional rubber barrier layer 13, a rubber inner liner 22 and polymeric sulfur curable diene-based polyurethane (TPU) adhesive layer 23. The polyurethane sealant layer 20 is then applied to the adhesive layer 23 of the already sulfur cured tire (and is therefore a post tire cure applied polyurethane sealant layer) to provide a tire with a sealant layer with puncture sealing properties against various puncturing objects.

The thickness of the circumferential polyurethane sealant layer 20 can vary depending somewhat upon the degree of sealing ability desired as well as the tire itself, including the tire size and intended tire use. For example, the thickness of the polyurethane sealant layer may range from 0.13 cm to 1.9 cm depending somewhat upon the tire itself and its intended use. For example, in passenger tires, the precursor sealant layer 20 might, for example, have a thickness in a range of 0.33 cm whereas for truck tires, the precursor sealant layer 20 might, for example, have a thickness in a range of 0.76 cm. The post cured tire applied built-on polyurethane sealant layer 20 is generally situated in the crown region of the tire 10, and, if desired, may include colorant so that it is of a non-black color that may contrast with the black colored inner liner, tread, or sidewall so that a tire puncture can be noticed.

Generally, the tire can be cured over a wide temperature range. For example, passenger tires might be cured at a temperature ranging from 130°C to 170°C and truck tires might be cured at a temperature ranging from 150°C to 180°C. Thus, a cure temperature may range, for example, from 130°C to 180°C and for a desired period of time.

### EXAMPLE I

A laminate containing a polyurethane adhesive layer (TPU) similar to FIG 2 was prepared as a layered test piece.

For the layered test piece, the following layers were assembled on top of the other in the following order:
(1) a 7" x 7" (17.8 x 17.8 cm) calendared sulfur curable rubber tread strip of about 0.1 " (0.25 cm) thickness, similar to tread 14 of FIG 2;
(2) a 3" x 3" (7.6 x 7.6 cm) wire cord reinforced sulfur curable rubber of about 0.068" (0.17 cm) thickness, similar to one of belt plies 16 of FIG 2;
(3) a 7" x 7" (17.8 x 17.8 cm) sulfur curable synthetic cord (such as, for example polyester cord) wire reinforced rubber belt layer (aligned with the above wire reinforced rubber) of about 0.026" (0.066 cm) thickness, similar to carcass ply 17 of FIG 2;
(4) a 7" x 7" (17.8 x 17.8) sulfur curable rubber tire inner liner of thickness of about 0.03" (0.08 cm), similar to inner liner 22 of FIG 2;
(5) a 5" x 5" (12.7 x 12.7 cm) thin sulfur curable diene-based thermoplastic polyurethane (TPU based adhesive layer, similar to adhesive layer 23 of FIG 2; and
(6) a 6" x 6" (15.2 x 15.2 cm) removable undrawn nylon 6,6 film covering said TPU polyurethane adhesive layer 20, not shown in FIG 2.

The above laminated test piece was cured for 35 minutes at 50°C under a pressure of 200 psi (1378 kPa).

Because the diene-based TPU polyurethane adhesive layer is sulfur curable, it participates in the sulfur curing of the composite at the interface between the sulfur curable inner liner rubber layer and the adhesive layer and is thereby sulfur cured and integral with the inner liner rubber layer.

After cooling, the nylon film was removed and a 3" x 3" (7.6 x 7.6 cm) polyurethane sealant layer having a thickness of about 0.125" (0.32 cm) was applied and adhered to the exposed TPU adhesive layer, similar to adhesive layer 20 of FIG 2.

The test piece was tested to evaluate puncture sealing effectiveness. In the testing process, the test piece was secured lengthwise across an open chamber of a box, which defined a bench top nail hole tester, to generally seal the opening to the chamber. The test piece was situated so that the innermost inner liner faced the open chamber and the tire tread faced outwardly. In the chamber, air pressure could be established via an inlet valve, maintained, and monitored to simulate a pressurized pneumatic tire. A nail was used to manually puncture the test piece. The test piece was subjected to puncturing by nails of varying and increasing diameter to evaluate air pressure loss after nail insertion, removal, and reinflation (if needed). Air pressure readings at each step were taken after a two-minute period. The results of the puncture sealing testing are set out in Table 1 below.

**Table 1 (Nail hole sealing capability)**

| | **Pressure** |
|---|---|
| Initial pressure | 35 psi (241 kPa) |
| After insertion and removal of new nail of diameter of 0.136" (0.35 cm) | 35 psi (241 kPa) |
| After insertion and removal of new nail of diameter of 0.165" (0.42 cm) | 35 psi (241 kPa) |
| After insertion and removal of new nail of diameter of 0.200" (0.51 cm) | 35 psi (241 kPa) |

From Table 1 it can be seen that the layered test piece which contained the post cured polyurethane sealant layer with accompanying built-in polyurethane adhesive (TPU) layer successively sealed against punctures caused by insertion of the respective nails completely through the test piece.

### EXAMPLE II

A pneumatic tire was prepared similar to FIG 1 with the co-cured built-in polyurethane (TPU) adhesive and post tire cure applied polyurethane layer puncture sealing layer.

The ends of the applied polyurethane sealant layer were abutted together to form a splice and a 1 inch (2.54 cm) wide strip of the TPU polyurethane adhesive applied over the splice to therefore abridge the splice for which the splice was successfully prevented from separating.

The nail hole puncture sealing ability is reported in Table 2 by nails inserted completely through the tire from the tread through the sealant layer.

**Table 2 (Nail hole sealing ability)**

| | **Pressure** |
|---|---|
| Initial pressure in the tire | 36 psi (248 kPa) |
| After insertion and removal of rusty nail of diameter of 0.092" (0.23 cm) | 36 psi (248 kPa) |
| After insertion and removal of rusty nail of diameter of 0.122" (0.31 cm) | 36 psi (248 kPa) |
| After insertion and removal of rusty nail of diameter of 0.192" (0.49 cm) | 36 psi (248 kPa) |

From Table 2 it can be seen that the nail induced puncture hole was successfully sealed in a sense of preventing loss of air pressure.

## Claims

1. A pneumatic tire comprising a sulfur cured assembly comprising an outer circumferential rubber tread (14), a supporting carcass, an inner liner rubber layer (22) inwardly disposed on the supporting carcass, a built-in polymeric sulfur curable thermoplastic diene-based polyurethane (TPU) adhesive layer (23) disposed inwardly of the rubber inner liner layer (22), and a polyurethane sealant layer (20) adhered to the built-in adhesive layer (23) which provides self-sealing properties to the pneumatic tire.

2. The tire of claim 1 wherein the polyurethane sealant layer (20) is of a seamless tubular polyurethane configuration or is a circumferential sheet with its ends abutted together.

3. The tire of claim 1 or 2 wherein the inner liner rubber layer (22) comprises a combination of a sulfur cured rubber and at least one of a sulfur cured diene-based polyurethane and a millable non diene-based polyurethane.

4. The tire of at least one of the previous claims wherein the inner liner rubber layer (22) has a layer of a sulfur cured diene-based polyurethane on its surface adjacent to the polyurethane sealant layer (23).

5. The tire of at least one of the previous claims wherein the tire further comprises a barrier layer (13) between the inner liner rubber layer (22) and the carcass.

6. The tire of at least one of the previous claims wherein the adhesive layer (23) is co-cured and thereby integral with the inner liner rubber layer (22).

7. A method of preparing a pneumatic tire, the method comprising:
(A) applying a polymeric adhesive layer (23) comprising a sulfur curable diene-based thermoplastic polyurethane (TPU) to a tire building apparatus to which a removable protective polymeric film has been applied which can later be removed from the adhesive layer (23) after curing,
(B) building a remainder of tire components onto the adhesive layer including a sulfur curable inner liner layer (22), a tire carcass and an outer a rubber tread (16) onto the tire carcass to define an unvulcanized tire assembly and removing the unvulcanized tire assembly from the tire building apparatus,
(C) sulfur vulcanizing the unvulcanized tire assembly in a suitable mold at an elevated temperature to provide a co-cured adhesive diene-based polyurethane layer (23) on the inner liner rubber layer (22),
(D) removing the removable protective polymeric film from the diene-based polyurethane adhesive layer (23) to provide a clean surface,
(E) adhering a polyurethane based sealant layer (20) to the clean surface to provide a self-sealant property for the pneumatic tire.

8. The method of claim 7 wherein the polyurethane based sealant layer (20) is of a seamless tubular polyurethane configuration.

9. The method of claim 7 wherein the polyurethane based sealant layer (20) is a circumferential sheet with its ends abutted together.

10. The method of claim 7 wherein the sulfur curable inner liner rubber layer (22) comprises a combination of a sulfur curable rubber and at least one of a sulfur curable diene-based polyurethane and a millable non diene-based polyurethane.

11. The method of claim 7 or 10 wherein the sulfur curable inner liner rubber layer (22) comprises a sulfur curable rubber and a sulfur curable diene-based polyurethane.

12. The method of at least one of the previous claims wherein the sulfur curable inner liner rubber layer (22) has a layer of sulfur curable diene-based polyurethane on its sulfur curable rubber surface adjacent to the polyurethane based sealant layer (20).

13. The method of at least one of the previous claims wherein the tire building apparatus is a tire building drum and the polymeric adhesive layer (23) is applied circumferentially about the tire building drum.

14. The method of at least one of the previous claims further comprising applying a sulfur curable rubber barrier layer (13) onto the adhesive layer (23) prior to applying the sulfur curable inner liner layer (22).

15. The method of at least one of the previous claims 7 to 13 further comprising applying a sulfur curable rubber barrier layer (13) after applying the sulfur curable inner liner layer (22) and prior to applying the carcass.

## Patentansprüche

1. Luftreifen, umfassend eine schwefelvulkanisierte Anordnung, umfassend eine äußere umfangsgerichtete Gummilauffläche (14), eine tragende Karkasse, eine einwärts an der tragenden Karkasse angeordnete Innenisolierungs-Gummischicht (22), eine einwärts von der Gummi-Innenisolierungsschicht (22) eingebaute, polymere schwefelvulkanisierbare Haftschicht (23) aus thermoplastischem dienbasiertem Polyurethan (TPU), und eine an die eingebaute Haftschicht (23) geheftete Polyurethan-Abdichtungsschicht (20), die den Luftreifen mit selbstdichtenden Eigenschaften versieht.

2. Reifen nach Anspruch 1, wobei die Polyurethan-Abdichtungsschicht (20) von einer nahtlosen röhrenförmigen Polyurethan-Konfiguration ist oder ein umfangsgerichteter Bogen ist, dessen Enden aneinanderstoßen.

3. Reifen nach Anspruch 1 oder 2, wobei die Innenisolierungs-Gummischicht (22) eine Kombination aus einem schwefelvulkanisierten Kautschuk und mindestens einem eines schwefelvulkanisierten dienbasierten Polyurethans und eines walzbaren nicht-dienbasierten Polyurethans umfasst.

4. Reifen nach mindestens einem der vorgenannten Ansprüche, wobei die Innenisolierungs-Gummischicht (22) eine Schicht eines schwefelvulkanisierten dienbasierten Polyurethans an ihrer Oberfläche benachbart zu der Polyurethan-Abdichtungsschicht (23) aufweist.

5. Reifen nach mindestens einem der vorgenannten Ansprüche, wobei der Reifen weiter eine Barriereschicht (13) zwischen der Innenisolierungs-Gummischicht (22) und der Karkasse umfasst.

6. Reifen nach mindestens einem der vorgenannten Ansprüche, wobei die Haftschicht (23) co-vulkanisiert und dadurch einstückig mit der Innenisolierungs-Gummischicht (22) ist.

7. Verfahren zur Herstellung eines Luftreifens, wobei das Verfahren umfasst:
(A) Anbringen einer polymeren Haftschicht (23), die ein schwefelvulkanisierbares dienbasiertes thermoplastisches Polyurethan (TPU) umfasst, an einer Reifenaufbauvorrichtung, an der ein entfernbarer schützender Polymerfilm angebracht worden ist, der später, nach dem Vulkanisieren, von der Haftschicht (23) entfernt werden kann,
(B) Aufbauen der übrigen Reifenbauteile auf die Haftschicht, einschließlich einer schwefelvulkanisierbaren Innenisolierungsschicht (22), einer Reifenkarkasse und einer äußeren Kautschuklauffläche (16) auf die Reifenkarkasse, um eine unvulkanisierte Reifenanordnung zu definieren, und Entfernen der unvulkanisierten Reifenanordnung von der Reifenaufbauvorrichtung,
(C) Schwefelvulkanisieren der unvulkanisierten Reifenanordnung in einer geeigneten Formpresse auf einer erhöhten Temperatur, um eine covulkanisierte haftende dienbasierte Polyurethanschicht (23) an der Innenisolierungs-Gummischicht (22) anzubringen,
(D) Entfernen des entfernbaren schützenden Polymerfilms von der dienbasierten Polyurethan-Haftschicht (23), um eine saubere Oberfläche bereitzustellen,
(E) Anheften einer polyurethanbasierten Abdichtungsschicht (20) an der sauberen Oberfläche, um den Luftreifen mit einer selbstdichtenden Eigenschaft zu versehen.

8. Verfahren nach Anspruch 7, wobei die polyurethanbasierte Abdichtungsschicht (20) eine nahtlose röhrenförmige Polyurethan-Konfiguration aufweist.

9. Verfahren nach Anspruch 7, wobei die polyurethanbasierte Abdichtungsschicht (20) ein umfangsgerichteter Bogen ist, dessen Enden aneinanderstoßen.

10. Verfahren nach Anspruch 7, wobei die schwefelvulkanisierbare Innenisolierungs-Gummischicht (22) eine Kombination aus einem schwefelvulkanisierten Kautschuk und mindestens einem eines schwefelvulkanisierten dienbasierten Polyurethans und eines walzbaren nicht-dienbasierten Polyurethans umfasst.

11. Verfahren nach Anspruch 7 oder 10, wobei die schwefelvulkanisierbare Innenisolierungs-Gummischicht (22) einen schwefelvulkanisierbaren Kautschuk und ein schwefelvulkanisierbares dienbasiertes Polyurethan umfasst.

12. Verfahren nach mindestens einem der vorgenannten Ansprüche, wobei die schwefelvulkanisierbare Innenisolierungs-Gummischicht (22) eine Schicht schwefelvulkanisierbaren dienbasierten Polyurethans an ihrer schwefelvulkanisierbaren Kautschuk-Oberfläche benachbart zu der polyurethanbasierten Abdichtungsschicht (20) aufweist.

13. Verfahren nach mindestens einem der vorgenannten Ansprüche, wobei die Reifenaufbauvorrichtung eine Reifenaufbautrommel ist und die polymere Haftschicht (23) in Umfangsrichtung um die Reifenaufbautrommel herum angebracht wird.

14. Verfahren nach mindestens einem der vorgenannten Ansprüche, weiter das Anbringen einer schwefelvulkanisierbaren Kautschuk-Barriereschicht (13) auf der Haftschicht (23) vor dem Anbringen der schwefelvulkanisierbaren Innenisolierungsschicht (22) umfassend.

15. Verfahren nach mindestens einem der vorgenannten Ansprüche 7 bis 13, weiter das Anbringen einer schwefelvulkanisierbaren Kautschuk-Barriereschicht (13) nach dem Anbringen der schwefelvulkanisierbaren Innenisolierungsschicht (22) und vor dem Anbringen der Karkasse umfassend.

## Revendications

1. Bandage pneumatique comprenant un assemblage vulcanisé au soufre comprenant une bande de roulement circonférentielle externe en caoutchouc (14), une carcasse de support, une couche de caoutchouc (22) faisant office de calandrage intérieur disposée à l'intérieur de la carcasse de support, une couche adhésive polymère incorporée (23) constituée de polyuréthane thermoplastique à base diénique (TPU) vulcanisable au soufre, et une couche d'étanchéité en polyuréthane (20) adhérant à la couche adhésive incorporée (23) qui confère des propriétés d'étanchéité automatique au bandage pneumatique.

2. Bandage pneumatique selon la revendication 1, dans lequel la couche d'étanchéité en polyuréthane (20) possède une configuration de polyuréthane tubulaire sans soudure ou représente une feuille circonférentielle dont les extrémités sont mises bout-à-bout.

3. Bandage pneumatique selon la revendication 1 ou 2, dans lequel la couche de caoutchouc (22) faisant office de calandrage intérieur comprend une combinaison d'un caoutchouc vulcanisé au soufre et d'au moins un membre choisi parmi un polyuréthane à base diénique vulcanisé au soufre et un polyuréthane qui peut être broyé, non à base diénique.

4. Bandage pneumatique selon au moins une des revendications précédentes, dans lequel la couche de caoutchouc (22) faisant office de calandrage intérieur possède une couche de polyuréthane à base d'un diène vulcanisé au soufre sur sa surface adjacente à la couche d'étanchéité en polyuréthane (23).

5. Bandage pneumatique selon au moins une des revendications précédentes, dans lequel le bandage pneumatique comprend en outre une couche (13) faisant office de barrière entre la couche de caoutchouc (22) faisant office de calandrage intérieur et la carcasse.

6. Bandage pneumatique selon au moins une des revendications précédentes, dans lequel la couche adhésive (23) est covulcanisée avec la couche de caoutchouc (22) faisant office de calandrage intérieur et fait ainsi partie intégrante de cette dernière.

7. Procédé de préparation d'un bandage pneumatique, le procédé comprenant le fait de :
(A) appliquer une couche adhésive polymère (23) comprenant un polyuréthane thermoplastique à base diénique (TPU) vulcanisable au soufre sur un appareil de confection de bandage pneumatique, auquel on a appliqué un film polymère de protection amovible qui peut être retiré ultérieurement de la couche adhésive (23) après la vulcanisation ;
(B) confectionner le reste des composants du bandage pneumatique sur la couche adhésive, y compris une couche vulcanisable au soufre faisant office de calandrage intérieur (22), une carcasse de bandage pneumatique et une bande de roulement externe en caoutchouc (16) sur la carcasse du bandage pneumatique pour définir un assemblage de bandage pneumatique non vulcanisé et retirer l'assemblage de bandage pneumatique non vulcanisé de l'appareil de confection de bandage pneumatique ;
(C) vulcaniser au soufre l'assemblage de bandage pneumatique non vulcanisé dans un moule approprié à une température élevée pour obtenir une couche adhésive covulcanisée de polyuréthane à base diénique (23) sur la couche en caoutchouc (22) faisant office de calandrage intérieur ;
(D) retirer le film polymère de protection amovible de la couche adhésive de polyuréthane à base diénique (23) pour obtenir une surface propre ;
(E) faire adhérer une couche d'étanchéité (20) à base de polyuréthane sur la surface propre pour conférer une propriété d'étanchéité automatique au bandage pneumatique.

8. Procédé selon la revendication 7, dans lequel la couche d'étanchéité (20) à base de polyuréthane possède une configuration de polyuréthane tubulaire sans soudure.

9. Procédé selon la revendication 7, dans lequel la couche d'étanchéité (20) à base de polyuréthane représente une feuille circonférentielle dont les extrémités sont mises bout-à-bout.

10. Procédé selon la revendication 7, dans lequel la couche de caoutchouc vulcanisable au soufre (22) faisant office de calandrage intérieur comprend une combinaison d'un caoutchouc vulcanisable au soufre et d'au moins un membre choisi parmi un polyuréthane à base diénique vulcanisé au soufre et un polyuréthane qui peut être broyé, non à base diénique.

11. Procédé selon la revendication 7 ou 10, dans lequel la couche de caoutchouc vulcanisable au soufre (22) faisant office de calandrage intérieur comprend un caoutchouc vulcanisable au soufre et un polyuréthane à base diénique vulcanisable au soufre.

12. Procédé selon au moins une des revendications précédentes, dans lequel la couche de caoutchouc vulcanisable au soufre (22) faisant office de calandrage intérieur possède une couche de polyuréthane à base diénique vulcanisable au soufre sur sa surface adjacente à la couche d'étanchéité en polyuréthane (23).

13. Procédé selon au moins une des revendications précédentes, dans lequel l'appareil de confection de bandage pneumatique est un tambour de confection de bandage pneumatique et la couche adhésive polymère (23) est appliquée en position circonférentielle autour du tambour de confection de bandage pneumatique.

14. Procédé selon au moins une des revendications précédentes, comprenant en outre l'application d'une couche de caoutchouc vulcanisable au soufre (13) faisant office de barrière sur la couche adhésive (23) avant d'appliquer la couche de caoutchouc vulcanisable au soufre (22) faisant office de calandrage intérieur.

15. Procédé selon au moins une des revendications 7 à 13, comprenant l'application d'une couche de caoutchouc vulcanisable au soufre (13) faisant office de barrière sur la couche adhésive (23) après l'application de la couche de caoutchouc vulcanisable au soufre (22) faisant office de calandrage intérieur et avant l'application de la carcasse.
